# EUROPÄISCHE PATENTANMELDUNG

(11) **EP 0 747 649 A2**
(43) Veröffentlichungstag der Anmeldung: **11.12.1996**
(21) Anmeldenummer: 96108750.9
(22) Anmeldetag: 31.05.1996
(51) Int. Cl.: F28C 1/00

(54) **Verfahren zur Inbetriebnahme eines Naturzugkühlturms sowie zugehöriger Naturzugkühlturm**

(30) Priorität: 09.06.1995 DE 19521161
(71) Anmelder: BDAG Balcke-Dürr Aktiengesellschaft, D-40882 Ratingen (DE)
(72) Erfinder: Tesche, Walter, Dipl.-Ing., 40822 Mettmann (DE)
(74) Vertreter: Stenger, Watzke & Ring Patentanwälte

(57) **Zusammenfassung**

Die Erfindung betrifft ein Verfahren zur Inbetriebnahme eines Naturzugkühlturms mit Einleitung der vorzugsweise gereinigten Rauchgase mindestens eines mit fossilem Brennstoff betriebenen Dampferzeugers sowie einen zur Durchführung dieses Verfahrens geeigneten Naturzugkühlturm. Um während der Anlaufphase die Rauchgase von der Innenwand der Kühlturmschale (2) fernzuhalten, wird durch einen im Randbereich der Kühlturmschale (2) ausgebildet Bypass (5) zu den widerstandserzeugenden Kühleinbauten (3) ein rohrförmiger, den aufsteigenden Rauchgasstrom umhüllender Mantel aus Umgebungsluft aufgrund der Injektorwirkung der in den Kühlturm eintretenden Rauchgase erzeugt. Zu diesem Zweck ist zwischen den Kühleinbauten (3) und der Kühlturmschale (2) mindestens eine verschließbare Bypassöffnung (6a) ausgebildet.

## Beschreibung

Die Erfindung betrifft ein Verfahren zur Umhüllung eines etwa mittig in einem Naturzugkühlturm aufsteigenden, vorzugsweise in einer Rauchgas-Entschwefelungs- und/oder Entstickungs-Anlage gereinigten Rauchgasstromes mit einem die Rauchgase von der Kühlturmwand fernhaltenden Luftstrom sowie einen zur Durchführung dieses Verfahrens bestimmten Kühlturm.

Mit fossilen Brennstoffen betriebene Kraftwerke mit Kreislaufkühlung über Naturzugkühltürme benutzen vielfach den Naturzugkühlturm zur Ableitung der in einer Rauchgas-Entschwefelungs-Anlage und/oder einer Rauchgas-Entstickungsanlage gereinigten Rauchgase in die Atmosphäre. Die gereinigten Rauchgase werden hierbei über mindestens ein vorzugsweise in der Mitte des Kühlturmes oberhalb der Kühleinbauten mündendes Rauchgasrohr in den Kühlturm eingeleitet und dem Kühlluftschwaden beigemischt. Um Beschädigungen oder gar Zerstörungen insbesondere der Kühlturmschale zu verhindern, muß dafür gesorgt werden, daß sich die Rauchgase nicht an der Innenwand der Kühlturmschale niederschlagen können. Zu diesem Zweck werden bei den bekannten Naturzugkühltürmen in der Mitte des Kühlturmes mündende, in der Richtung des Kühlluftschwadens nach oben frei ausblasende Rauchgasrohre verwendet.

Aus der DE 42 31 813 A1 ist ein Verfahren zum Betreiben eines Naturzug-Kühlturms bekannt, bei dem das Kühlwasser in direktem Kontakt Wärme an die einströmende Luft abgibt, wodurch sich ein Feuchtluftstrom ausbildet, dem gereinigte Abgase zum Austrag in die Atmosphäre beigemischt werden.

Um die Kühlturmschale gegen die aggressiven Einwirkungen der in den Kühlturm eingeleiteten Rauchgase zu schützen, wird das Kühlwasser vor der Verteilung auf die einen aufsteigenden Feuchtluftstrom erzeugenden Rieseleinbauten im Randbereich des Kühlturms angeordneten Wärmeübertragern zugeleitet, die einen rohrförmigen Trockenluftstrom erzeugen, der den die Rauchgase enthaltenden Feuchtluftstrom in der Art eines Mantels umhüllt und auf diese Weise einen Kontakt zwischen den Rauchgasen und dem Inneren des Kühlturmmantels vermeidet.

Der durch die im Randbereich des Kühlturms angeordneten Trockenteile erzeugte Trockenluftstrom wird durch den Naturzug des Kühlturmes gleichzeitig mit dem durch den Naßteil entstehenden Feuchtluftstrom erzeugt, d.h. während des Betreibens des Naturzug-Kühlturms. Das Entstehen beider Luftströme setzt somit das Vorhandensein von zu kühlendem Wasser im Kühlturm voraus. Das aus der DE 42 31 813 A1 bekannte Verfahren erfolgt somit ausschließlich beim Betreiben eines Naturzug-Kühlturms.

Bei einer Inbetriebnahme des Naturzugkühlturms nach einem Betriebsstillstand des Kraftwerkes wird nach dem Starten des Kühlkreislaufes der Dampferzeuger gezündet, wonach sich der Dampfkreislauf und das Vakuum im Kondensator kontinuierlich aufbauen, bevor der Dampferzeuger in den Leistungsbetrieb übergeht. Beim Starten des Kühlkreislaufes wird das Kühlwasser bei Lufttemperaturen oberhalb des Gefrierpunktes über die gesamte Fläche der Kühleinbauten geleitet, wogegen bei Frostgefahr das Kühlwasser unmittelbar in das Auffangbecken der Kühleinbauten in den Kreislauf zurückgeführt wird. Während dieser Phase erfolgt noch keine Wärmezufuhr zum Kühlturm, so daß sich ein Auftrieb im Naturzugkühlturm im günstigsten Fall nur in sehr geringem Maße durch Restwärme im Kühlwasser einstellen kann, und zwar nur dann, wenn die gesamte Fläche der Kühleinbauten mit dem Kühlwasser beaufschlagt wird. Da nach dem Zünden des Dampferzeugers Rauchgase entstehen, die nach ihrer Reinigung sofort dem Naturzugkühlturm zugeführt werden, gelangen diese Rauchgase in einen wegen fehlendem Naturzug noch nicht betriebsbereiten Kühlturm. In Abhängigkeit von den jeweiligen anlagenspezifischen Gegebenheiten benötigt der Aufbau des Dampfkreislaufes und des Vakuums im Kondensator nach dem Zünden des Dampferzeugers bis zum Übergang in den Leistungsbetrieb im Minimum 30 Minuten bis ungünstigenfalls mehrere Stunden. Während dieser Zeit durchströmen die Rauchgase den Naturzugkühlturm, ohne daß sich ein die Rauchgase einhüllender Kühlluftschwaden ausgebildet hat. Da die Kühleinbauten einen gleichrichtenden Strömungswiderstand für die Kühlluft darstellen, können sich in der Anlaufphase die Rauchgase durch Rezirkulationsströmungen an der Innenwand der Kühlturmschale niederschlagen und dort Korrosionsschäden verursachen.

Der Erfindung liegt die **Aufgabe** zugrunde, ein Verfahren zur Inbetriebnahme eines Naturzugkühlturms mit Einleitung der Rauchgase mindestens eines mit fossilem Brennstoff betriebenen Dampferzeugers und einen für dieses Verfahren geeigneten Kühlturm zu schaffen, die das Auftreten von durch die Rauchgase bewirkten Korrosionsschäden auch in der Anlaufphase des Aufbaues des Dampfkreislaufes und des Vakuums im Kondensator nach dem Zünden des Dampferzeugers bis zum Übergang in den Leistungsbetrieb verhindern.

Die **Lösung** dieser Aufgabenstellung durch das erfindungsgemäße Verfahren ist dadurch gekennzeichnet, daß bei der Inbetriebnahme des Kühlturms durch einen im Randbereich der Kühlturmschale ausgebildeten Bypass zu den widerstandserzeugenden Kühleinbauten ein rohrförmiger, den aufsteigenden Rauchgasstrom umhüllender Mantel aus Umgebungsluft aufgrund der Injektorwirkung der in den Kühlturm eintretenden Rauchgase erzeugt wird.

Mit dem erfindungsgemäßen Verfahren wird bei der Inbetriebnahme eines Naturzugkühlturms mit Rauchgaseinleitung im kritischen Zeitraum zwischen Zünden des Dampferzeugers mit Einleiten der Rauchgase bis zum vollständigen Aufbau des Naturzuges aufgrund der Injektorwirkung der in den Kühlturm eingeleiteten Rauchgase durch Ausbildung eines Bypasses zu den Kühleinbauten ein Mantel aus Umgebungsluft in den Kühlturm angesaugt, der den aufsteigenden Rauchgasstrom rohrförmig umhüllt und auf diese Weise von der Innenwand der Kühlturmschale fernhält. Die Injektorwirkung der in den noch kalten Kühlturm eingeleiteten Rauchgase wird somit dazu genutzt, einen Hüllstrom aus Umgebungsluft in den noch nicht betriebsbereiten Naturzugkühlturm anzusaugen, der die Kühlturmschale in dieser Anlaufphase vor Korrosionsschäden schützt. Im Gegensatz zu dem aus der DE 42 31 813 A1 bekannten Verfahren wird somit nicht ein durch das Kühlwasser aufgrund des Naturzuges erzeugter Trockenluftstrom, sondern ein aufgrund der Injektorwirkung der in den Kühlturm eintretenden Rauchgase erzeugter Strom aus Umgebungsluft zur Umhüllung der ggf. schädlichen Rauchgase benutzt, um während der Anlaufphase des Kühlturms Korrosionsschäden an der Kühlturmschale zu verhindern. Das erfindungsgemäße Verfahren unterscheidet sich somit nicht nur durch das Medium, das den Rauchgasstrom umhüllt, sondern auch durch die Art der Erzeugung des umhüllenden Mantelstroms von dem aus der DE 42 31 813 A1 bekannten Verfahren.

Gemäß einem weiteren Merkmal der Erfindung wird dieser Bypass von Umgebungsluft in Abhängigkeit des sich durch das Anfahren des Dampferzeugers einstellenden Wärmeeintrages über das Kühlwasser geregelt. Mit einem zunehmenden Eintrag von Wärme in das Kühlwassersystem und dem damit verbundenen Aufbau des Naturzuges wird somit der Bypass der korrosionsverhindernden Umgebungsluft in Abhängigkeit von dem sich aufbauenden Naturzug verringert bis der Betriebszustand erreicht und der erfindungsgemäße Bypass beendet werden kann.

Der zur Durchführung des Verfahrens nach der Erfindung ausgebildete Naturzugkühlturm ist erfindungsgemäß dadurch gekennzeichnet, daß zwischen den Kühleinbauten und der Kühlturmschale mindestens eine verschließbare Bypassöffnung für einen durch die Injektorwirkung der aus dem Rauchgasrohr austretenden Rauchgase erzeugten Luftstrom ausgebildet ist. Das Öffnen und Verschließen dieser Bypassöffnung erfolgt über entsprechende Einrichtungen in Abhängigkeit des Wärmeeintrages und des sich hierdurch aufbauenden Naturzuges.

Bei einer bevorzugten Ausführungsform des erfindungsgemäßen Naturzugkühlturms ist die Bypassöffnung durch den ringförmigen Zwischenraum zwischen dem äußeren Rand der Kühleinbauten und der benachbarten Wand der Kühlturmschale gebildet und durch einzelne, separat betätigbare Klappen und/oder Schieber verschließbar.

Bei einer alternativen Ausbildung nach der Erfindung ist die Bypassöffnung durch eine Mehrzahl von über den Umfang verteilten Öffnungen in der Kühlturmschale gebildet, die unabhängig voneinander durch jeweils mindestens eine Klappe und/oder einen Schieber verschließbar sind.

Bei einer dritten Ausführungsmöglichkeit nach der Erfindung ist die Bypassöffnung durch einen im wesentlichen ringförmigen Kanal zwischen den Kühleinbauten und der Kühlturmschale gebildet, dessen Saugseite unterhalb der Kühleinbauten im Bereich der Stützen der Kühlturmschale mündet und der durch Klappen und/oder Schieber verschließbar ist.

Eine weitere Ausgestaltungsmöglichkeit des erfindungsgemäßen Naturzugkühlturmes besteht darin, daß eine das zu kühlende Wasser für die Kühleinbauten führende, zwischen dem äußeren Rand der Kühleinbauten und der Kühlturmschale angeordnete Ringleitung, die auch als "Winterringleitung" bezeichnet wird, zur Bildung der Bypassöffnung höhenverstellbar angeordnet wird.

Schließlich wird mit der Erfindung vorgeschlagen, die Abdeckung dieser das zu kühlende Wasser für die Kühleinbauten führenden, zwischen dem äußeren Rand der Kühleinbauten und der Kühlturmschale angeordneten Ringleitung zur Bildung der Bypassöffnung zumindest teilweise aufklappbar und/oder aufschiebbar auszubilden.

Allen erfindungsgemäßen Ausgestaltungen des Naturzugkühlturmes ist gemeinsam, daß durch Freigabe einer während des Normalbetriebes geschlossenen Bypassöffnung während der Inbetriebnahme des Naturzugkühlturmes infolge der Injektorwirkung der in den Kühlturm eingeleiteten Rauchgase ein Bypassstrom aus Umgebungsluft in den Kühlturm eingesaugt wird, der den aufsteigenden Rauchgasstrom in der Art eines rohrförmigen Mantels umhüllt und von der Innenseite der Kühlturmschale fernhält, solange sich innerhalb des Kühlturms aufgrund einer ungenügenden Wärmeeinleitung über den Kühlkreislauf noch kein oder kein ausreichender Naturzug ausgebildet hat.

Das erfindungsgemäße Verfahren und der zu dessen Durchführung ausgebildete Kühlturm verhindern somit auf zuverlässige Weise und mit geringem technischen Aufwand Korrosionsschäden während der Inbetriebnahme eines Naturzugkühlturms, in den die Rauchgase mindestens eines mit fossilem Brennstoff betriebenen Dampferzeugers eingeleitet werden.

Auf der Zeichnung, die zur Erläuterung des erfindungsgemäßen Verfahrens dient, sind vier Ausführungsbeispiele eines erfindungsgemäßen Kühlturms dargestellt, und zwar zeigt:
- Fig. 1: einen schematischen Längsschnitt durch einen im Leistungsbetrieb befindlichen Kühlturm mit Einleitung von Rauchgasen,
- Fig. 2: eine der Fig. 1 entsprechende Schnittdarstellung während der Inbetriebnahme des Kühlturms, und zwar ohne die Erzeugung einer die Rauchgase umhüllenden Bypassströmung aus Umgebungsluft,
- Fig. 3: einen Ausschnitt aus einem senkrechten Schnitt durch eine erste Ausführungsform des erfindungsgemäßen Naturzugkühlturmes,
- Fig. 4: einen der Fig. 3 entsprechenden Teilschnitt einer zweiten Ausführungsform,
- Fig. 5: eine weitere Ausführungsform der Erfindung in einem Teilschnitt und
- Fig. 6: eine vierte Ausführungsform des erfindungsgemäßen Naturzugkühlturms.

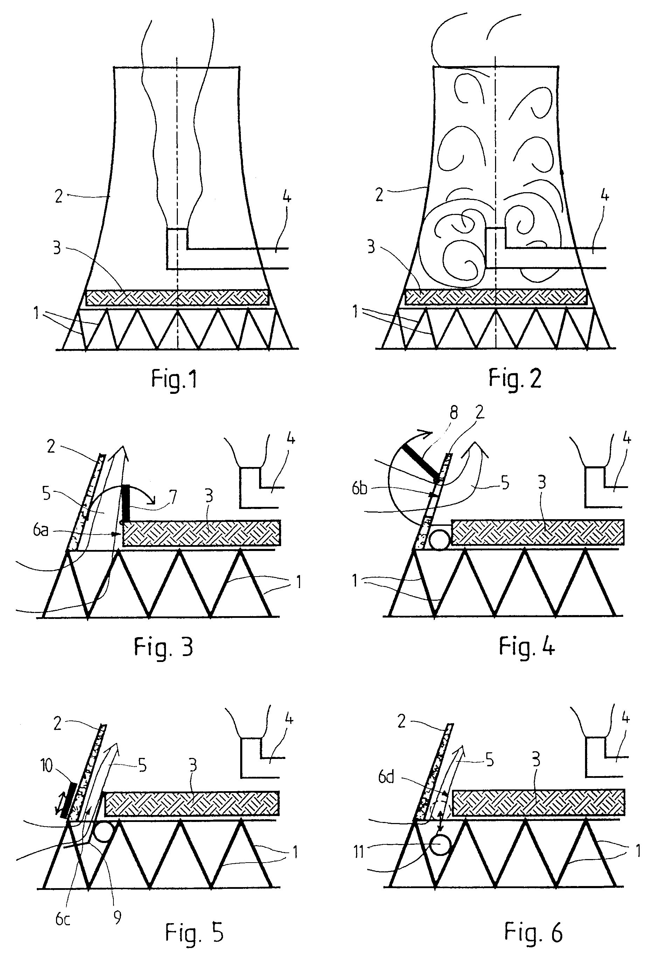

Der in den Fig. 1 und 2 schematisch in einem Längsschnitt dargestellte Naturzugkühlturm umfaßt eine auf Stützen 1 ruhende Kühlturmschale 2, in der oberhalb der Lufteintrittsöffnungen bildenden Stützen 1 Kühleinbauten 3 angeordnet sind. Auf diese Kühleinbauten 3 wird das zu kühlende Kreislaufwasser eines in der Zeichnung nicht dargestellten Dampferzeugers von oben her aufgesprüht und im Gegenstrom durch von unten her aufsteigende Kühlluft gekühlt. Diese Luft wird in das Innere der Kühlturmschale angesaugt, sobald sich durch eine ausreichende Wärmeeinleitung aufgrund des zu kühlenden, den Kühleinbauten 3 aufgegeben Wassers ein Naturzug in der Kühlturmschale 2 aufgebaut hat.

Durch ein oberhalb der Kühleinbauten 3 in der Mitte der Kühlturmschale 2 mündendes Rauchgasrohr 4 werden die vorzugsweise in einer Rauchgas-Entschwefelungs-Anlage und/oder Rauchgas-Entstickungs-Anlage gereinigten Rauchgase mindestens eines mit fossilem Brennstoff betriebenen Dampferzeugers in den Kühlturm eingeleitet. In Fig. 1 ist dargestellt, daß diese Rauchgase beim normalen Leistungsbetrieb des Naturzugkühlturmes durch die in der Kühlturmschale 2 aufsteigende Kühlluft umhüllt und aus der Kühlturmschale 2 ausgetragen werde, ohne daß die Rauchgase mit der Innenwand der Kühlturmschale 2 in Kontakt treten können. Sofern das zu kühlende Wasser der Oberfläche der Kühleinbauten 3 aufgegeben wird, ist die Kühlluft mit Feuchtigkeit beladen. Es entsteht der sogenannte Kühlturmschwaden. Der Naturzugkühlturm kann aber auch im geschlossenen Kreislauf als Trockenkühlturm betrieben werden, bei dem kein feuchtigkeitsbeladener Kühlturmschwaden entsteht. Schließlich ist es möglich, den Naturzugkühlturm als sogenannten Hybridkühlturm mit einer Mischung aus offenem und geschlossenem Kreislauf auszubilden.

Unabhängig von der jeweiligen Ausbildung der Kühleinbauten 3 ergibt sich bei einer Inbetriebnahme des Naturzugkühlturmes im Zeitraum zwischen dem Zünden des Dampferzeugers und dem Übergang in den Leistungsbetrieb während der Aufbauphase des Dampfkreislaufes und des Vakuums im Kondensator des Dampferzeugers eine Situation, die schematisch in Fig. 2 angedeutet ist.

Durch den noch fehlenden Naturzug aufgrund ungenügendem Wärmeeintrag in die Kühlturmschale 2 während der Anlaufphase können die nach dem Zünden des Dampferzeugers entstehenden und über das Rauchgasrohr 4 in die Kühlturmschale 2 eingeleiteten Rauchgase sich unkontrolliert in der Kühlturmschale 2 ausbreiten. Da selbst bei beginnendem Naturzug die Kühleinbauten 3 als gleichrichtender Strömungswiderstand auf die Kühlluft wirken, ergeben sich Rezirkulationsströmungen der Rauchgase innerhalb der Kühlturmschale 2, die gemäß Fig. 2 dazu führen, daß die Rauchgase in Kontakt mit der Innenwand der Kühlturmschale 2 treten und hier Korrosionsschäden hervorrufen. Die Beaufschlagung der Innenwand der Kühlturmschale 2 wird erst beendet, wenn der Naturzugkühlturm nach Aufbau des Dampfkreislaufes und des Vakuums im Kondensator in den Leistungsbetrieb übergeht, wie dies in Fig. 1 dargestellt ist.

Um auch während einer derartigen Inbetriebnahme eines Naturzugkühlturms mit Rauchgaseinleitung Korrosionsschäden zu verhindern, wird durch einen im Randbereich der Kühlturmschale 2 ausgebildeten Bypass 5 ein den aus dem Rauchgasrohr 4 aufsteigenden Rauchgasstrom rohrförmig umhüllender Mantel aus Umgebungsluft erzeugt, und zwar aufgrund der Injektorwirkung der in den Kühlturm eintretenden Rauchgase. Die für die Erzeugung eines derartigen Bypasses 5 erforderlichen Ausgestaltungen des Naturzugkühlturms sind anhand von vier Ausführungsbeispielen in den Fig. 3 bis 6 dargestellt. Bei allen Ausführungsbeispielen ist zwischen den Kühleinbauten 3 und der Kühlturmschale 2 eine verschließbare Bypassöffnung 6a,6b,6c,6d für einen durch die Injektorwirkung der aus dem Rauchgasrohr 4 austretenden Rauchgase erzeugten Luftstrom ausgebildet.

Beim ersten Ausführungsbeispiel nach Fig. 3 wird diese Bypassöffnung 6a durch den ringförmigen Zwischenraum zwischen dem äußeren Rand der Kühleinbauten 3 und der benachbarten Wand der Kühlturmschale 2 gebildet. Die Bypassöffnung 6a ist durch einzelne, separat betätigbare Klappen 7 oder Schieber verschließbar. Durch Öffnen dieser Klappen 7 wird über die Bypassöffnung 6a während der Inbetriebnahme des Naturzugkühlturms ein Bypass 5 aus Umgebungsluft angesaugt, wie dies in Fig. 3 schematisch angedeutet ist.

Bei der zweiten Ausführungsform nach Fig. 4 ist die Bypassöffnung 6b durch eine Mehrzahl von über den Umfang verteilter Öffnungen in der Kühlturmschale 2 ausgebildet, die wiederum unabhängig voneinander durch jeweils mindestens eine Klappe 8 verschließbar sind. Auch bei dieser Ausführungsform ergibt sich somit infolge der Injektorwirkung der aus dem Rauchgasrohr 4 austretenden Rauchgase ein Bypass 5 aus Umgebungsluft, der die im Innern der Kühlturmschale 2 aufsteigenden Rauchgase umhüllt und einen Kontakt der Rauchgase mit der Innenwand der Kühlturmschale 2 verhindert.

Das dritte Ausführungsbeispiel nach Fig. 5 zeigt die Ausbildung einer Bypassöffnung 6c durch Bildung eines ringförmigen Kanales 9, der zwischen dem äußeren Rand der Kühleinbauten 3 und der Kühlturmschale 2 angeordnet ist und dessen Saugseite unterhalb der Kühleinbauten 3 im Bereich der Stützen 1 der Kühlturmschale 2 mündet. Dieser Kanal 5 ist durch eine Mehrzahl von Schiebern 10 verschließbar, von denen einer schematisch in Fig. 5 zu erkennen ist. Auch bei dieser Ausführungsform ist es somit möglich, während der Inbetriebnahme des Naturzugkühlturmes einen Bypass 5 aus Umgebungsluft zu erzeugen und diesen Bypass während der Anlaufphase zu regeln sowie zu beenden, sobald der Leistungsbetrieb erreicht ist.

Das vierte Ausführungsbeispiel nach Fig. 6 zeigt schließlich eine Bypassöffnung 6d, die dadurch geschaffen wird, daß eine zwischen dem äußeren Rand der Kühleinbauten 3 und der Kühlturmschale 2 angeordnete Ringleitung 11 nach unten abgesenkt wird. Diese auch als "Winterringleitung" bezeichnete Ringleitung dient normalerweise als Einfrierschutz zur Vorwärmung der Kühleinbauten 3 und wird zu diesem Zweck mit Kühlwasser beaufschlagt. Durch ihre Verlagerung nach unten gibt sie einen Ringraum zwischen den Kühleinbauten 3 und der Kühlturmschale 2 frei, so daß während der Inbetriebnahme des Naturzugkühlturmes der erwähnte Bypass 5 entstehen kann. Während des Leistungsbetriebes befindet sich die Ringleitung 11 in der in Fig. 6 gestrichelt dargestellten Stellung und verhindert somit einen unerwünschten Zutritt von Umgebungsluft während des Normalbetriebes des Kühlturms.

Anstelle einer Höhenverlagerung der Ringleitung 11 kann eine Bypassöffnung auch geschaffen werden, wenn die im Normalfall vorhandene Abdeckung dieser Ringleitung 11 zumindest teilweise aufklappbar und/oder aufschiebbar ausgebildet wird.

### Bezugszeichenliste:

- 1: Stütze
- 2: Kühlturmschale
- 3: Kühleinbauten
- 4: Rauchgasrohr
- 5: Bypass
- 6a: Bypassöffnung
- 6b: Bypassöffnung
- 6c: Bypassöffnung
- 6d: Bypassöffnung
- 7: Klappe
- 8: Klappe
- 9: Kanal
- 10: Schieber
- 11: Ringleitung

## Patentansprüche

1. Verfahren zur Umhüllung eines etwa mittig in einem Naturzugkühlturm aufsteigenden, vorzugsweise in einer Rauchgas-Entschwefelungs- und/oder Entstickungs-Anlage gereinigten Rauchgasstromes mit einem die Rauchgase von der Kühlturmwand fernhaltenden Luftstrom,
**dadurch gekennzeichnet,**
daß bei der Inbetriebnahme des Kühlturms durch einen im Randbereich der Kühlturmschale (2) ausgebildeten Bypass (5) zu den widerstandserzeugenden Kühlturmeinbauten (3) ein rohrförmiger, den aufsteigenden Rauchgasstrom umhüllender Mantel aus Umgebungsluft aufgrund der Injektorwirkung der in den Kühlturm eintretenden Rauchgase erzeugt wird.

2. Verfahren nach Anspruch 1, dadurch gekennzeichnet, daß der Bypass (5) in Abhängigkeit des sich durch das Anfahren des Dampferzeugers einstellenden Wärmeeintrages über das Kühlwasser geregelt wird.

3. Naturzugkühlturm mit Einleitung der vorzugsweise in einer Rauchgas-Entschwefelungs- und/oder -Entstickungs-Anlage gereinigten Rauchgase mindestens eines mit fossilem Brennstoff betriebenen Dampferzeugers durch mindestens ein vorzugsweise in der Mitte des Kühlturms oberhalb der Kühleinbauten (3) mündendes Rauchgasrohr,
**dadurch gekennzeichnet,**
daß zwischen den Kühleinbauten (3) und der Kühlturmschale (2) mindestens eine verschließbare Bypassöffnung (6a,6b,6c,6d) für einen durch die Injektorwirkung der aus dem Rauchgasrohr (4) austretenden Rauchgase erzeugten Luftstrom ausgebildet ist.

4. Naturzugkühlturm nach Anspruch 3, dadurch gekennzeichnet, daß die Bypassöffnung (6a) durch den ringförmigen Zwischenraum zwischen dem äußeren Rand der Kühleinbauten (3) und der benachbarten Wand der Kühlturmschale (2) gebildet und durch einzelne, separat betätigbare Klappen (7) und/oder Schieber verschließbar ist.

5. Naturzugkühlturm nach Anspruch 3, dadurch gekennzeichnet, daß die Bypassöffnung (6b) durch eine Mehrzahl von über den Umfang verteilten Öffnungen in der Kühlturmschale (2) gebildet ist, die unabhängig voneinander durch jeweils mindestens eine Klappe (8) und/oder einen Schieber verschließbar sind.

6. Naturzugkühlturm nach Anspruch 3, dadurch gekennzeichnet, daß die Bypassöffnung (6c) durch einen im wesentlichen ringförmigen Kanal (9) zwischen den Kühleinbauten (3) und der Kühlturmschale (2) gebildet ist, dessen Saugseite unterhalb der Kühleinbauten (3) im Bereich der Stützen (1) der Kühlturmschale (2) mündet und der durch Klappen und/oder Schieber (10) verschließbar ist.

7. Naturzugkühlturm nach Anspruch 3, dadurch gekennzeichnet, daß eine das zu kühlende Wasser für die Kühleinbauten (3) führende, zwischen dem äußeren Rand der Kühleinbauten (3) und der Kühlturmschale (2) angeordnete Ringleitung (11) zur Bildung der Bypassöffnung (6d) höhenverstellbar angeordnet ist.

8. Naturzugkühlturm nach Anspruch 3, dadurch gekennzeichnet, daß die Abdeckung einer das zu kühlende Wasser für die Kühleinbauten (3) führenden, zwischen dem äußeren Rand der Kühleinbauten (3) und der Kühlturmschale (2) angeordneten Ringleitung (11) zur Bildung der Bypassöffnung zumindest teilweise aufklappbar und/oder aufschiebbar ist.
